Europäisches Patentamt

(19) European Patent Office

Office européen des brevets

(11) Numéro de publication: **0 073 085**
**B1**

(12) **FASCICULE DE BREVET EUROPEEN**

(45) Date de publication du fascicule du brevet:
12.03.86

(21) Numéro de dépôt: 82201037.7

(22) Date de dépôt: 18.08.82

(51) Int. Cl.⁴: **C 01 D 7/35**

(54) **Procédé et installation pour la fabrication de carbonate de sodium monohydraté.**

(30) Priorité: 26.08.81 FR 8116415

(43) Date de publication de la demande:
02.03.83 Bulletin 83/9

(45) Mention de la délivrance du brevet:
12.03.86 Bulletin 86/11

(84) Etats contractants désignés:
AT BE CH DE FR GB IT LI NL SE

(56) Documents cités:
FR - A - 1 429 596
US - A - 3 236 590

Encyclopedia of Chemical Technology Kirk-Othmer, Vol.
15, pages 604-617

(73) Titulaire: **SOLVAY & Cie (Société Anonyme), Rue du
Prince Albert, 33, B-1050 Bruxelles (BE)**

(72) Inventeur: **Verlaeten, Jean, Avenue Circulaire, 144A,
B-1180 Bruxelles (BE)**
Inventeur: **Guerdon, Constant, Avenue des Anciens
Combattants, 37, B-1950 Kraainem (BE)**
Inventeur: **Caubet, Jean, Rue Particulière, 31,
F-54110 Dombasle-sur-Meurthe (FR)**
Inventeur: **Walter, André, Rue Victor Legrand, 25,
F-54210 Saint-Nicolas-de-Port (FR)**

## Description

La présente invention est relative à un procédé pour la fabrication de carbonate de sodium monohydraté au départ de carbonate de sodium anhydre.

La fabrication de carbonate de sodium monohydraté au départ de carbonate de sodium anhydre est communément mise en œuvre pour l'obtention de carbonate de sodium anhydre dense (appelé communément soude dense) au départ de carbonate de sodium anhydre léger (appelé communément soude légère) (Te-Pang Hou, 1969, Manufacture of Soda, deuxième édition, Hafner Publishing Company, New York).

Il est généralement important pour l'industrie, et notamment en verrerie et en sidérurgie, de disposer de carbonate de sodium anhydre dense, bien cristallisé, exempt de fines et présentant une bonne résistance à l'abrasion.

Lorsque du carbonate de sodium anhydre dense est obtenu par déshydratation de cristaux de carbonate de sodium monohydraté, sa morphologie cristalline et ses propriétés, notamment son poids spécifique apparent sont tributaires de la morphologie cristalline du carbonate de sodium monohydraté.

Dans le brevet Etats-Unis US-A-3 236 590, on décrit un procédé en deux étapes pour la fabrication de carbonate de sodium monohydraté. Dans une première étape, on introduit des cristaux de carbonate de sodium anhydre dans une solution aqueuse de carbonate de sodium maintenue à une température voisine de la température de transition du carbonate de sodium monohydraté en carbonate de sodium anhydre; dans une seconde étape, on refroidit la suspension aqueuse de la première étape, en sorte de cristalliser du carbonate de sodium monohydraté.

Dans le brevet belge BE-A-661 071 (correspondant au brevet FR-A-1 429 596) (Allied Chemical Corporation), on propose un procédé pour cristalliser en une seule étape du carbonate de sodium monohydraté au départ de carbonate de sodium anhydre, notamment de carbonate de sodium anhydre léger. Selon ce procédé connu, on ajoute le carbonate de sodium anhydre et de l'eau à une suspension aqueuse de cristaux de carbonate de sodium monohydraté dans un cristalliseur à une température inférieure au point de transition du carbonate de sodium monohydraté en carbonate de sodium anhydre, on soumet le mélange résultant à une vive turbulence pour le rendre homogène, on soutire une partie du mélange homogène résultant, que l'on répartit en une première fraction contenant uniquement des cristaux fins et une seconde fraction contenant principalement de gros cristaux de carbonate de sodium monohydraté, on recueille les cristaux de la seconde fraction et on recycle la première fraction dans le cristalliseur. Dans ce procédé connu, il est difficile d'obtenir une dispersion homogène de carbonate de sodium anhydre dans le mélange, car les grains de carbonate de sodium anhydre présentent une tendance naturelle à flotter et à s'agglutiner à la surface du bain. Pour assurer une dispersion suffisante du carbonate de sodium anhydre dans le mélange, on soumet celui-ci à une turbulence très intense et de longue durée. Ceci présente toutefois le désavantage de grever le coût de production du carbonate de sodium monohydraté et de réduire la productivité du procédé. La turbulence conduit en outre au désavantage supplémentaire de provoquer un bris important des cristaux de carbonate de sodium monohydraté et de donner lieu à une production importante de cristaux fins, de sorte que le procédé impose une classification ultérieure des cristaux de carbonate de sodium monohydraté soutirés hors du cristalliseur et un recyclage des cristaux fins. Dans l'installation représentée à la figure 1 du brevet BE-A-661 071, le mélange du carbonate de sodium anhydre et de la suspension aqueuse est opéré au moyen d'un agitateur monté sur un arbre vertical de rotation, dans une enceinte cylindrique verticale munie d'un fond plat et de cloisons verticales le long des parois. La présence des cloisons verticales empêche la formation d'un vortex au sein du mélange.

L'invention vise à fournir un procédé qui permet d'obtenir directement et de manière économique des cristaux réguliers de carbonate de sodium monohydraté au départ de carbonate de sodium anhydre et qui ne nécessite plus une classification ultérieure des cristaux, ceux-ci convenant bien, tels quels, pour l'obtention de carbonate de sodium anhydre dense, de bonne qualité.

L'invention concerne dès lors un procédé de fabrication de carbonate de sodium monohydraté, selon lequel on mélange du carbonate de sodium anhydre et de l'eau avec une suspension aqueuse de cristaux de carbonate de sodium monohydraté, à une température inférieure au point de transition du carbonate de sodium monohydraté en carbonate de sodium anhydre, on homogénéise le mélange résultant et on sépare les cristaux de carbonate de sodium monohydraté; selon l'invention, pour mélanger le carbonate de sodium anhydre avec la suspension, on introduit le carbonate de sodium anhydre dans une zone de la suspension, dans laquelle on engendre un vortex.

Dans la mise en œuvre de procédé selon l'invention, l'origine du carbonate de sodium anhydre n'est pas critique. On utilise avantageusement des cristaux de carbonate de sodium anhydre léger résultant de la calcination de bicarbonate de sodium obtenu par le procédé à l'ammoniaque.

D'une manière générale, la quantité d'eau à mettre en œuvre doit être approximativement égale à la quantité d'eau nécessaire pour hydrater le carbonate de sodium anhydre en carbonate de sodium monohydraté. On peut éventuellement s'écarter de la quantité strictement nécessaire à l'hydratation du carbonate de sodium, si on accepte une dilution ou une concentration partielle de la suspension de cristaux de carbonate de sodium monohydraté.

Selon une forme de réalisation avantageuse du procédé selon l'invention, une partie au moins de l'eau est mise en œuvre à l'état d'une solution aqueuse saturée de carbonate de sodium; on peut avantageusement utiliser à cet effet l'eau mère recueillie après séparation des cristaux de carbonate de sodium monohydraté de la suspension.

La suspension initiale de cristaux de carbonate de sodium monohydraté peut être réalisée de diverses façons et n'est pas critique. Elle peut par exemple, provenir d'une source extérieure au procédé ou être obtenue par évaporation partielle d'une solution aqueuse de carbonate de sodium.

En général, on règle avantageusement la concentration de la suspension auquese de carbonate de sodium monohydraté pour qu'elle contienne entre 20 et 60%, de préférence entre 30 et 55%, en poids de cristaux de carbonate de sodium monohydraté.

Il s'est avéré spécialement avantageux de mettre en œuvre une suspension aqueuse de cristaux de carbonate de sodium monohydraté contenant du chlorure de sodium dissous. On a en effet observé que, toutes autres choses restant égales, la présence de chlorure de sodium dissous dans la suspension assure une meilleure cristallisation du carbonate de sodium monohydraté au cours du procédé et inhibe la formation d'incrustations sur les parois des cristalliseurs.

En règle générale, on obtient de bons résultats avec une teneur pondérale en chlorure de sodium comprise entre 3 et 17%, de préférence entre 8 et 12%, du poids de la suspension.

Le chlorure de sodium peut être introduit dans la suspension de cristaux de carbonate de sodium monohydraté à l'état solide ou par tout autre moyen connu en soi.

La température de la suspension de carbonate de sodium monohydraté pendant l'exécution du procédé selon l'invention doit être choisie suffisamment basse pour que le carbonate de sodium anhydre introduit dans la suspension y cristallise à l'état monohydraté. Le choix de la température optimum dépend de divers facteurs, notamment de la concentration de la suspension de cristaux de carbonate de sodium monohydraté et de la granulométrie des cristaux ainsi que de la granulométrie et de la morphologie du carbonate de sodium anhydre. Elle peut être déterminée dans chaque cas particulier par un travail de routine au laboratoire.

En règle générale, on choisit une température telle que son écart par rapport à son point de transition soit compris entre environ 2 et environ 25 °C, de préférence inférieur à 15 °C, les meilleurs résultats étant généralement obtenus avec un écart compris entre 3 et 10 °C.

Le carbonate de sodium anhydre mélangé à la suspension peut être à température ambiante.

On préfère toutefois, selon une forme d'exécution avantageuse du procédé selon l'invention, mettre en œuvre du carbonate de sodium anhydre chaud, se trouvant de préférence à une température au moins égale à la température de la suspension.

Toutes autres choses restant égales, les cristaux de carbonate de sodium monohydraté obtenus conformément à cette forme d'exécution de l'invention présentent une distribution granulométrique qui se caractérise par un diamètre moyen des cristaux plus grand et par un indice d'homogénéité plus élevé, l'indice d'homogénéité étant, par définition, le pente de la droite représentant la distribution granulométrique cumulative dans un diagramme logarithmique de Rosin Rammler (G. Herdan, Small particle statistics, deuxième édition, 1960, Butterworths editors, Grande-Bretagne, pages 86 à 88 et 99 à 101).

En règle générale, dans cette forme d'exécution particulière du procédé selon l'invention, on obtient de bons résultats en mettant en œuvre du carbonate de sodium anhydre se trouvant à une température entre 90 et 200 °C, de préférence entre 100 et 150 °C.

La température de l'eau mélangée à la suspension de carbonate de sodium monohydraté n'est pas critique. D'une manière générale, elle peut être réglée en fonction des autres paramètres du procédé, pour réaliser la température recherchée dans la suspension de carbonate de sodium monohydraté.

Dans le procédé selon l'invention, on introduit le carbonate de sodium anhydre dans une zone de la suspension de carbonate de sodium monohydraté, où l'on engendre un vortex.

On entend désigner par vortex, un écoulement tourbillonnaire tel qu'il est défini dans la théorie cinématique des fluides, caractérisé par des lignes de courant circulaires et concentriques pour lesquelles la vitesse en chaque point présente une composante normale nulle et une composante circonférentielle inversément proportionnelle au rayon de la ligne de courant (Encyclopédie Internationale des Sciences et des Techniques, Vol. 10, 1973, Larousse, Presses de la Cité, pages 535 à 537).

Dans le procédé selon l'invention, le vortex a pour fonction de transférer le carbonate de sodium anhydre au sein de la suspension de carbonate de sodium monohydraté en aval du vortex. Il est habituellement un vortex descendant, par exemple un vortex vertical descendant.

Les caractéristiques intrinsèques du vortex (vitesses circonférentielles, profondeur, diamètre) dépendent de divers facteurs, notamment des dimensions du cirstalliseur, de la granulométrie du carbonate de sodium anhydre, de sa température et de son débit d'alimentation, de la concentration de la suspension de carbonate de sodium monohydraté, de sa viscosité et de sa température. Elles doivent être déterminées dans chaque cas particulier par un travail de routine au laboratoire.

L'écoulement de la suspension, en aval du vortex, doit être réglé pour permettre le transfert, à l'intérieur de celle-ci, des particules de carbonate de sodium anhydre entraînées avec le vortex.

Dans le cadre de l'invention, des écoulements qui conviennent bien, en aval du vortex, sont ceux comprenant une translation rectiligne dans le prolongement et le sens du vortex, par exemple une translation verticale descendante dans le cas où on met en œuvre un vortex vertical descendant.

Selon une forme d'exécution spécialement avantageuse du procédé selon l'invention, on met

en œuvre, en aval du vortex, une translation rectiligne sans rotation. Cette forme de réalisation du procédé selon l'invention présente l'avantage d'assurer une excellente pénétration des grains de carbonate de sodium anhydre du vortex dans la suspension de carbonate de sodium monohydraté. Elle évite par ailleurs une turbulence excessive de la suspension et elle conduit à l'obtention de cristaux de carbonate de sodium mononhydraté bien formés, dont la distribution granulométrique se caractérise par un diamètre moyen des grains et un indice d'homogénéité qui conviennent bien pour la fabrication ultérieure de carbonate de sodium anhydre dense, de poids spécifique apparent au moins égal à 0,9 kg/dm$^3$ et généralement supérieur à 1 kg/dm$^3$.

Pour accélérer la pénétration des grains de carbonate de sodium anhydre dans la suspension en aval du vortex et améliorer davantage la qualité des cristaux de carbonate de sodium monohydraté, il s'est avéré spécialement avantageux, selon une forme d'exécution particulière du procédé selon l'invention, d'engendrer, autour du vortex, un courant annulaire de la suspension de carbonate de sodium monohydraté et de soumettre ce courant á une translation rectiligne de même sens que le vortex, sans rotation.

Pour assurer une cristallisation efficace du carbonate de sodium monohydraté tout en limitant l'encombrement du cristalliseur utilisé, on peut selon une forme d'exécution préférée du procédé selon l'invention, soumettre la suspension à un écoulement continu comprenant le vortex et éventuellement l'écoulement annulaire parallèle précité, une translation rectiligne, de préférence sans rotation, en aval du vortex, dans le même sens que celui-ci et une translation rectiligne en sens opposé, sans rotation.

Dans la mise en œuvre du procédé selon l'invention, on peut travailler indifféremment de manière continue ou de manière discontinue.

L'invention concerne aussi une installation pour la mise en œuvre du procédé selon l'invention, comprenant, d'une part, une chambre de cristallisation en communication avec un dispositif d'admission de carbonate de sodium anhydre, avec un dispositif d'admission d'eau et avec un dispositif de soutirage d'une suspension aqueuse de cristaux de carbonate de sodium monohydraté et, d'autre part, un dispositif de séparation des cristaux de carbonate de sodium monohydraté de la suspension aqueuse soutirée de la chambre de cristallisation; selon l'invention, la chambre de cristallisation comprend:
    – une enceinte cylindre verticale,
    – une colonne verticale ouverte à ses extrémités supérieure et inférieure et disposée dans l'enceinte, sous le niveau normal de la suspension de cristaux de carbonate de sodium monohydraté,
    – une cheminée verticale, ouverte à ses extrémités supérieure et inférieure et disposée dans la partie supérieure de la colonne,
    – un moyen pour engendrer un vortex rectiligne descendant dans une suspension aqueuse de cristaux de carbonate de sodium monohydraté dans la cheminée,
    – un moyen pour soumettre une suspension aqueuse de carbonate de sodium monohydraté contenue dans la colonne à une translation verticale descendante;
    et le dispositif d'admission de carbonate de sodium anhydre comprend un conduit qui débouche dans la cheminée.

Dans l'installation selon l'invention, le moyen pour engendrer le vortex peut par exemple consister en une hélice logée dans le bas de la cheminée et couplée à un arbre vertical.

On peut utiliser tout moyen connu pour engendrer une translation verticale de la suspension de carbonate de sodium monohydraté dans la colonne, par exemple un dispositif à gazosiphon, une turbine ou une hélice.

Dans une forme de réalisation particulière de l'installation selon l'invention, des déflecteurs verticaux sont fixés transversalement à la paroi de la colonne, à l'intérieur de celle-ci et des cloisons verticales sont disposées radialement dans la chambre annulaire formée entre la paroi de l'enceinte et la colonne.

Dans cette forme de réalisation de l'invention, les déflecteurs et les cloisons ont pour fonction de s'opposer à une rotation de la suspension de cristaux de carbonate de sodium monohydraté pendant sa translation verticale descendante dans la colonne et sa translation verticale ascendante dans la chambre annulaire autour de la colonne.

Dans une forme de réalisation avantageuse de l'installation selon l'invention, la cheminée est disposée axialement dans la colonne et les moyens pour engendrer le vortex et entraîner la suspension dans la colonne sont constitués d'une hélice disposée dans la colonne, sous la cheminée, et couplée à un arbre vertical de rotation.

Cette forme de réalisation de l'installation selon l'invention présente l'avantage d'être de construction plus simple et d'assurer une circulation symétrique de la suspension de carbonate de sodium monohydraté dans la chambre de cristallisation.

Des particularités et détails de l'invention ressortiront de la description suivante de quelques formes de réalisation de l'invention en référence aux dessins annexés.

La figure 1 des dessins est un schéma d'une installation mettant en œuvre le procédé selon l'invention.

La figure 2 montre schématiquement en section verticale axiale, une première forme de réalisation de la chambre de cristallisation de l'installation selon l'invention schématisée à la figure 1.

Les figures 3 et 4 sont des sections transversales horizontales respectivement selon les plans III–III et IV–IV de la figure 2.

La figure 5 est une vue analogue à la figure 2, d'une seconde forme de réalisation de la chambre de cristallisation de l'installation selon l'invention.

Dans ces figures, des mêmes notations de référence désignent des éléments identiques.

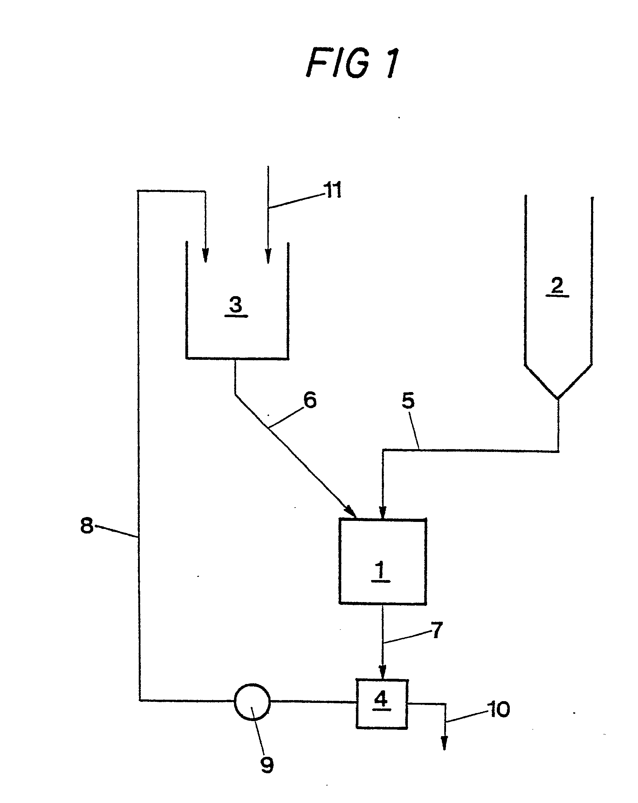

L'installation représentée schématiquement à la figure 1 comprend une chambre 1 pour la cristallisation de carbonate de sodium monohydraté, un silo 2 de stockage de carbonate de sodium anhydre, par exemple du carbonate de sodium léger, un réservoir 3 de stockage d'une solution aqueuse de chlorure de sodium et de carbonate de sodium et un dispositif d'essorage 4 pour séparer les cristaux de carbonate de sodium monohydraté de la suspension soutirée de la chambre 1.

Des conduits 5, 6 et 7 relient la chambre de cristallisation 1 respectivement au silo 2, au réservoir 3 et au dispositif d'essorage 4. Un conduit 8 et une pompe 9 servent à recycler dans le réservoir 3 l'eau mère recueillie du dispositif d'essorage 4, après séparation des cristaux de carbonate de sodium monohydraté que l'on recueille par un conduit 10. Un conduit 11 sert à l'admission d'eau dans le réservoir 3.

Un four 11 peut éventuellement être interposé dans le conduit 5, si on souhaite préchauffer le carbonate de sodium anhydre avant son admission dans la chambre de cristallisation 1.

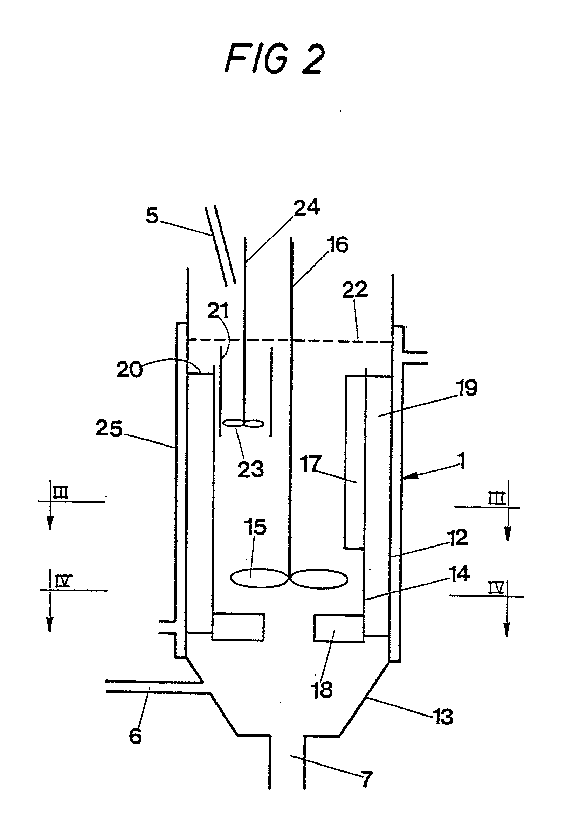

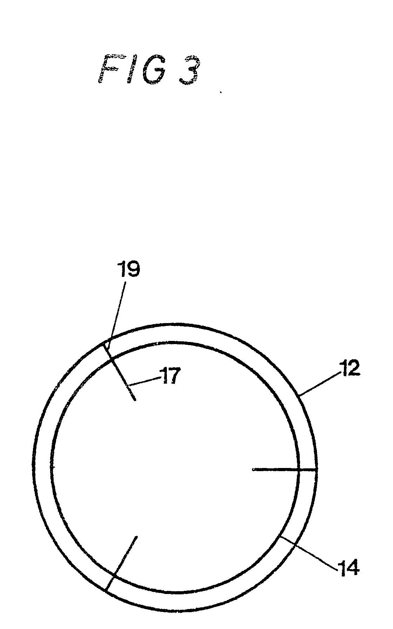

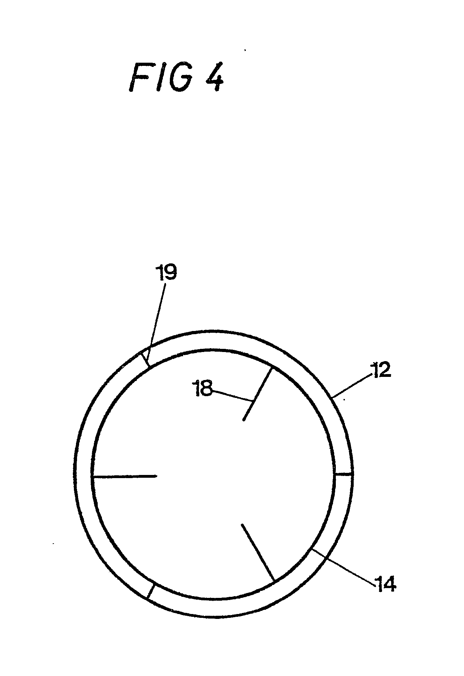

On a représenté, aux figures 2 à 4, une forme de réalisation particulière, conforme à l'invention, de la chambre de cristallisation 1 de l'installation de la figure 1.

Conformément à la forme d'exécution représentée aux figures 2 à 4, la chambre de cristallisation 1 comprend une enceinte cylindrique verticale 12, un fond tronconique 13, une colonne cylindrique verticale 14 disposée axialement dans l'enceinte 12 et ouverte à ses extrémités supérieure et inférieure, et une hélice 15 disposée dans la zone inférieure de la colonne 14 et couplée à un arbre vertical de rotation 16.

Deux groupes de déflecteurs verticaux, respectivement 17 et 18, sont fixés transversalement à la paroi de la colonne 15, à l'intérieur de celle-ci; les déflecteurs 17, au nombre de trois, sont disposés au-dessus de l'hélice 15 et les déflecteurs 18, au nombre de trois, sont disposés sous l'hélice 15.

Trois cloisons verticales 19 sont disposées radialement dans la chambre annulaire 20 formée entre la paroi de l'enceinte 12 et la colonne 14.

Dans la partie supérieure de la colonne 14, une cheminée verticale cyclindrique 21 est disposée dans la zone supérieure de la colonne 14, entre l'arbre 16 de l'hélice 15 et la paroi de la colonne 14. Le conduit 5 d'admission de carbonate de sodium anhydre dans la chambre 1 débouche au-dessus de la cheminée 21.

La colonne 14 et la cheminée 21 sont disposées toutes les deux au-dessous du niveau normal 22 du bain dans l'enceinte 12, pendant le fonctionnement normal de l'installation.

Dans la cheminée 21 est disposée une hélice 23 couplée à un arbre vertical de rotation 24.

L'enceinte 12 est par ailleurs entourée d'une enveloppe 25 pour la circulation d'eau ou d'un autre fluide réfrigérant, pour maintenir la température dans la chambre de cristallisation 1 à une température sensiblement constante, prédéterminée.

Pendant le fonctionnement en régime de l'installation représentée aux figures 1 à 4, l'enceinte 12 est remplie, sensiblement jusqu'au niveau 22, d'une suspension aqueuse de cristaux de carbonate de sodium monohydraté dans une solution aqueuse de carbonate et de chlorure de sodium et sa température est maintenue en permanence quelques degrés sous la température de transition du carbonate de sodium monohydraté en carbonate de sodium anhydre.

On introduit en continu de l'eau dans le réservoir 3, via le conduit 11; simultanément, du carbonate de sodium anhydre et une solution aqueuse de carbonate de sodium et de chlorure de sodium sont introduits dans la chambre 1 via les conduits 5 et 6 respectivement et une fraction de la suspension contenue dans la chambre 1 est soutirée de celle-ci par le conduit 7 et transférée au dispositif d'essorage 4, où on sépare des cristaux de carbonate de sodium monohydraté, recueillis en 10, et une eau mère que l'on recycle dans le réservoir 3 via le conduit 8 de la pompe 9.

Les débits respectifs d'eau, via le conduit 11, de carbonate de sodium anhydre via le conduit 5, de solution aqueuse via le conduit 6 et de suspension via le conduit 7 sont réglés de manière à éviter une variation du niveau de la suspension dans la chambre de cristallisation 1 et à maintenir ses concentrations en cristaux de carbonate de sodium monohydraté et en chlorure de sodium dissous sensiblement constantes.

Par exemple, après avoir fixé les débits respectifs de carbonate de sodium anhydre via le conduit 5 et d'eau via le conduit 11, on règle le débit de soutirage de la suspension via le conduit 7 pour maintenir le nievau 22 de la suspension dans la chambre de cristallisation 1 sensiblement constant et on règle le débit d'eau mère recyclée pour maintenir la densité de la suspension aqueuse dans la chambre de cristallisation à la valeur souhaitée.

Dans le cas où le carbonate de sodium anhydre du silo 2 est exempt de chlorure de sodium, il convient de prévoir un apport de chlorure de sodium dans la chambre de cristallisation 1; cet apport de chlorure de sodium est facilement réalisé en introduisant l'eau via le conduit 11, à l'état d'une saumure de chlorure de sodium.

Dans le cas où le carbonate de sodium anhydre du silo 2 contient du chlorure de sodium, il convient au contraire de prévoir une purge d'eau mère sur le circuit de recyclage 8 et un apport supplémentaire d'eau via le conduit 11, pour compenser l'eau éliminée par la purge.

En variante, au lieu de travailler de manière continue comme décrit ci-dessus, on peut aussi travailler en discontinu. A cet effet on ne soutire que périodiquement la suspension hors de la chambre 1, via le conduit 7, et on règle les fréquences de soutirage pour que le niveau de la suspension dans la chambre 1 varie entre une limite supérieure et une limite inférieure prédéterminées.

Conformément au procédé selon l'invention, la suspension contenue dans la chambre 1 est soumise, sous l'action de la rotation de l'hélice 15, à une circulation en continu comprenant une translation verticale descendante dans la colonne 14 et une translation verticale ascendante dans la chambre annulaire 20. Les déflecteurs 17, 18 et les cloisons 19 empêchent une rotation de la suspension dans le sens de rotation de l'hélice 15.

Simultanément, l'hélice 23 engendre un vortex vertical descendant dans la partie de la suspension contenue dans la cheminée 21, la profondeur du vortex étant légèrement supérieure à la hauteur de la cheminée.

Les particules de carbonate de sodium anhydre provenant du conduit 5 tombent dans la cheminée 21 où elles sont entraînées par le vortex et projetées dans la suspension contenue dans la colonne 12, sous la cheminée 21, où elles sont immédiatement dispersées.

Pendant la circulation en continu de la suspension dans la colonne 12 et la chambre annulaire 20, le carbonate de sodium anhydre recristallise à l'état de carbonate de sodium monohydraté.

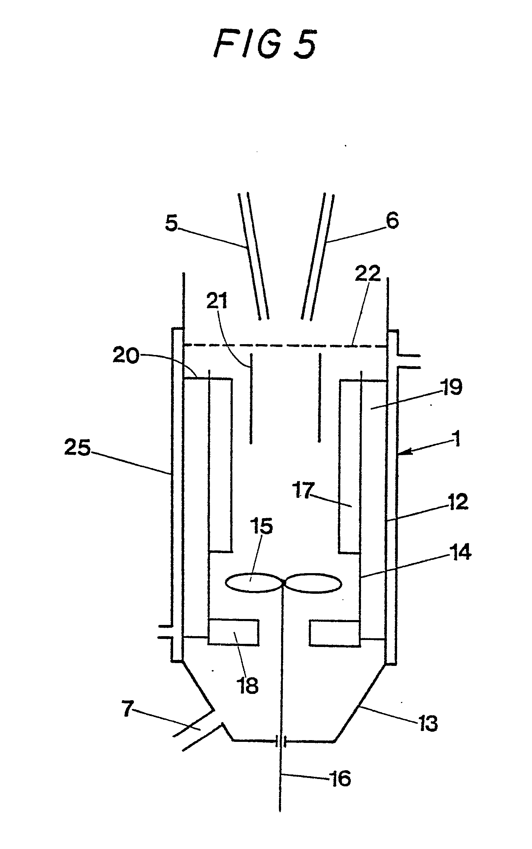

La figure 5 montre une forme de réalisation modifiée de la chambre de cristallisation, dans laquelle l'hélice 23 et son arbre 24 sont supprimés. Dans la chambre de cristallisation de la figure 5, la colonne 14 est disposée axialement dans l'enceinte 12 et la cheminée 21 est disposée axialement dans la colonne 14. Une hélice unique 15, couplée à un arbre vertical 16 de rotation, est disposée sous la cheminée 21; elle assure la double fonction d'engendrer un vortex vertical descendant dans la cheminée 21 et une translation verticale de la suspension du haut vers le bas dans la colonne 14 et du bas vers le haut dans la chambre annulaire 20.

Le conduit 6 d'admission de solution de carbonate de sodium et de chlorure de sodium débouche dans la cheminèe 21, au-dessus du vortex, de préférence au voisinage de l'axe de la cheminée 21. Pour éviter la formation d'incrustations sur l'arbre vertical 16 de rotation de l'hélice 15, cet arbre 16 est disposé entièrement sous l'hélice et traverse le fond tronconique 13 de l'enceinte 12.

Dans les exemples d'application qui suivent, on a préparé des cristaux de carbonate de sodium monohydraté au départ de carbonate de sodium anhydre dans une installation conforme à celle schématisée aux figures 1 et 5.

Exemple 1

On a mis en œuvre, dans la chambre de cristallisation, une suspension aqueuse contenant environ 0,45 kg de carbonate de sodium monohydraté par kg et on l'y a maintenue à une température de 95 °C.

On a alimenté la cheminée 21 avec du carbonate de sodium léger à température ambiante et avec une solution aqueuse de chlorure de sodium et de carbonate de sodium à 60 °C, présentant la composition suivante:

$Na_2CO_3$: 204 g/l
NaCl: 104 g/l
$H_2O$: 692 g/l

Les débits du carbonate de sodium léger et de la solution aqueuse ont été réglés pour permettre un soutirage continu horaire de 1000 kg de suspension à 45% en poids de carbonate de sodium monohydraté, par $m^3$ du volume utile de la chambre de cristallisation 1.

L'essai a été poursuivi de manière ininterrompue pendant 48 heures et on a prélevé périodiquement, toutes les quatre heures, des échantillons prélevés. Les résultats sont consignés au tableau I ci-après.

Tableau I

| Echantillon N° | Durée de marche (heures) | Distribution granulométrique du carbonate de sodium monohydraté | | | | | | | | Diamètre moyen (mm) | Indice d'homogénéité |
| | | Refus (% en poids) au diamètre d (mm) | | | | | | | | | |
| | | d=1 | d=0,8 | d=0,5 | d=0,315 | d=0,250 | d=0,160 | d=0,100 | d=0,063 | | |
|---|---|---|---|---|---|---|---|---|---|---|---|
| 1 | 4 | 0 | 0 | 7,5 | 33,8 | 58,2 | 85,4 | 95,5 | 98,4 | 0,27 | 2,7 |
| 2 | 8 | 0 | 0 | 8,5 | 39,5 | 60,3 | 84,0 | 94,8 | 97,8 | 0,28 | 2,4 |
| 3 | 12 | 0 | 0 | 6,6 | 37,5 | 60,7 | 86,6 | 95,8 | 98,4 | 0,28 | 2,7 |
| 4 | 16 | 0 | 0 | 6,8 | 40,2 | 62,0 | 85,8 | 95,3 | 98,2 | 0,29 | 2,5 |
| 5 | 20 | 0 | 0 | 7,5 | 39,9 | 63,7 | 85,7 | 96,3 | 98,6 | 0,29 | 2,7 |
| 6 | 24 | 0 | 0 | 9,6 | 40,6 | 60,9 | 85,8 | 96,0 | 98,5 | 0,29 | 2,6 |
| 7 | 28 | 0 | 0,1 | 6,7 | 37,6 | 60,8 | 86,7 | 95,9 | 98,5 | 0,28 | 2,7 |
| 8 | 32 | 0 | 0,1 | 7,7 | 35,6 | 60,2 | 85,1 | 95,9 | 98,4 | 0,27 | 2,8 |
| 9 | 36 | 0 | 0 | 6,9 | 36,0 | 55,3 | 83,0 | 95,2 | 98,1 | 0,27 | 2,5 |
| 10 | 40 | 0 | 0 | 7,0 | 44,4 | 65,6 | 86,4 | 95,4 | 98,2 | 0,30 | 2,4 |
| 11 | 44 | 0 | 0 | 9,4 | 40,5 | 63,2 | 85,7 | 95,7 | 98,6 | 0,27 | 2,5 |
| 12 | 48 | 0 | 0,1 | 10,1 | 42,2 | 61,2 | 81,1 | 94,8 | 98,0 | 0,29 | 2,3 |
| Moyenne | | | | | | | | | | 0,282 | 2,57 |

Par calcination du carbonate de sodium monohydraté, on a obtenu de carbonate de sodium dense de poids spécifique voisin de 1,13 kg/dm³.

Exemple 2

On a répété l'essai de l'exemple 1, en préchauffant le carbonate de sodium anhydre à environ 100 °C, avant de l'introduire dans la chambre de réaction 1. L'essai a duré 71 heures.

Les résultats des analyses granulométriques opérées sur les échantillons de carbonate de sodium monohydraté sont consignés au tableau II ci-après.

0 073 085

Tableau II

| Echantil-lon N° | Durée de marche (heures) | Distribution granulométrique du carbonate de sodium monohydraté | | | | | | | | Diamètre moyen (mm) | Indice d'homo-généité |
|---|---|---|---|---|---|---|---|---|---|---|---|
| | | Refus (% en poids) au diamètre d (mm) | | | | | | | | | |
| | | d=1 | d=0,8 | d=0,5 | d=0,315 | d=0,250 | d=0,160 | d=0,100 | d=0,063 | | |
| 1 | 6,5 | 0 | 0,2 | 10,8 | 58,0 | 83,3 | 96,0 | 98,5 | 99,1 | 0,35 | 3,2 |
| 2 | 11 | 0 | 0,6 | 18,7 | 57,8 | 77,7 | 93,2 | 98,5 | 99,7 | 0,36 | 2,9 |
| 3 | 15 | 0 | 0,6 | 27,8 | 62,1 | 79,6 | 92,9 | 98,5 | 99,7 | 0,38 | 2,8 |
| 4 | 23 | 0 | 0,2 | 23,1 | 61,9 | 79,8 | 94,3 | 98,5 | 99,6 | 0,38 | 2,9 |
| 5 | 26,5 | 0 | 1,0 | 27,7 | 62,5 | 81,3 | 94,2 | 98,5 | 99,7 | 0,39 | 2,8 |
| 6 | 30,5 | 0 | 0,7 | 25,4 | 59,2 | 77,3 | 92,1 | 98,2 | 99,7 | 0,36 | 2,8 |
| 7 | 35 | 0 | 0,4 | 21,1 | 53,8 | 80,9 | 94,0 | 98,7 | 99,8 | 0,37 | 2,9 |
| 8 | 39,5 | 0 | 0,4 | 21,6 | 60,5 | 77,9 | 93,6 | 98,1 | 99,6 | 0,38 | 2,8 |
| 9 | 43 | 0 | 0,5 | 22,9 | 59,6 | 77,3 | 93,7 | 98,8 | 99,8 | 0,37 | 2,7 |
| 10 | 47 | 0 | 0,8 | 24,4 | 63,6 | 80,4 | 93,6 | 98,5 | 99,7 | 0,38 | 2,8 |
| 11 | 50 | 0 | 0,9 | 25,8 | 61,0 | 79,1 | 93,6 | 98,5 | 99,8 | 0,37 | 2,8 |
| 12 | 54,5 | 0 | 0,7 | 23,3 | 57,4 | 77,6 | 93,4 | 98,5 | 99,6 | 0,36 | 2,9 |
| 13 | 59 | 0 | 0,6 | 19,7 | 53,7 | 76,2 | 93,3 | 98,7 | 99,8 | 0,34 | 3,0 |
| 14 | 63 | 0 | 0,5 | 25,2 | 60,2 | 79,5 | 94,4 | 98,9 | 99,8 | 0,38 | 2,8 |
| 15 | 67 | 0 | 0,5 | 22,0 | 57,8 | 79,1 | 93,3 | 98,4 | 99,7 | 0,37 | 2,8 |
| 16 | 71 | 0 | 0,5 | 20,5 | 54,4 | 72,3 | 89,7 | 97,8 | 99,7 | 0,35 | 2,6 |
| Moyenne | | | | | | | | | | 0,368 | 2,84 |

Après calcination du carbonate de sodium monohydraté recueilli, on a obtenu du carbonate de sodium dense de poids spécifique apparent sensiblement égal à 1,13 kg/dm$^3$.

## Revendications

1. Procédé de fabrication de carbonate de sodium monohydraté, selon lequel on mélange du carbonate de sodium anhydre et de l'eau avec une suspension aqueuse de cristaux de carbonate de sodium monohydraté à une température inférieure au point de transition du carbonate de sodium monhydraté en carbonate de sodium anhydre, on homogénéise le mélange résultant et on sépare les cristaux de carbonate de sodium monohydraté, caractérisé en ce que pour mélanger le carbonate de sodium anhydre avec la suspension, on introduit le carbonate de sodium anhydre dans une zone de la suspension, dans laquelle on engendre un vortex.

2. Procédé selon la revendication 1, caractérisé en ce qu'en aval du vortex, qui est rectiligne, descendant, on soumet la suspension à une translation rectiligne descendante dans le prolongement du vortex, sans rotation.

3. Procédé selon la revendication 2, caractérisé en ce qu'autour du vortex, on engendre un courant annulaire de suspension que l'on soumet à une translation rectiligne descendante, dans le sens du vortex, sans rotation.

4. Procédé selon la revendication 3, caractérisé en ce qu'on soumet la suspension à un écoulement continu comprenant le vortex et le courant annulaire, la translation rectiligne descendante précitée en aval du vortex et une translation rectiligne ascendante sans rotation.

5. Procédé selon l'une quelconque des revendications 1 à 4, caractérisé en ce qu'on met en œuvre une suspension aqueuse de carbonate de sodium monohydraté contenant de 30 à 55% en poids de cristaux de carbonate de sodium monohydraté et de 8 à 12% en poids de chlorure de sodium dissous.

6. Procédé selon l'une quelconque des revendications 1 à 5, caractérisé en ce qu'on règle la température de la suspension pour que sa différence avec le point de transition du carbonate de sodium monohydraté en carbonate de sodium anhydre soit comprise entre 3 et 10 °C et on chauffe le carbonate de sodium anhydre à une température au moins égale à la température de la suspension avant de le mélanger à celle-ci.

7. Installation pour la fabrication de carbonate de sodium monohydraté conformément au procédé selon l'une quelconque des revendications 4 à 6, comprenant, d'une part, une chambre de cristallisation (1) en communication avec un dispositif d'admission de carbonate de sodium anhydre (5), avec un dispositif d'admission d'eau (6) et avec un dispositif de soutirage d'une suspension aqueuse de cristaux de carbonate de sodium monohydraté (7) et, d'autre part, un dispositif de séparation des cristaux de carbonate de sodium monohydraté de la suspension aqueuse soutirée de la chambre de cristallisation, caractérisée en ce que la chambre de cristallisation (1) comprend une enceinte cylindrique verticale (12), une colonne verticale (14) ouverte à ses extrémités supérieure et inférieure et disposée dans l'enceinte, sous le niveau normal de la suspension de cristaux de carbonate de sodium monohydraté une cheminée verticale (21) ouverte à ses extrémités supérieure et inférieure et disposée dans la partie supérieure de la colonne, un moyen (23, 15) pour engendrer un vortex rectiligne descendant dans une suspension aqueuse de cristaux de carbonate de sodium monohydraté dans la cheminée (21) et un moyen (15) pour soumettre une suspension aqueuse de carbonate de sodium monohydraté contenue dans la colonne (14) à une translation verticale descendante, et en ce que le dispositif d'admission de carbonate de sodium anhydre comprend un conduit (5) qui débouche dans la cheminée (21).

8. Installation selon la revendication 7, caractérisée en ce que la cheminée (21) est disposée axialement dans la colonne (14) qui est elle-même disposée axialement dans l'enceinte (12) et en ce que le moyen pour engendrer le vortex et le moyen pour soumettre la suspension à la translation dans la colonne consistent en une hélice (15) disposée dans la colonne, sous la cheminée, et en ce que des déflecteurs verticaux (17, 18) sont fixés transversalement à la paroi de la colonne (14), à l'intérieur de celle-ci et des cloisons verticales (19) sont disposées radialement dans la chambre annulaire (20) formée entre la paroi de l'enceinte (12) et la colonne (14).

9. Installation selon la revendication 8, caractérisée en ce que l'hélice (15) est couplée à un arbre vertical de rotation (16) qui est disposé entièrement sous l'hélice (15).

10. Installation selon l'une quelconque des revendications 7 à 9, caractérisée en ce que le dispositif d'admission d'eau comprend un conduit (6) qui débouche dans la cheminée (21) et en ce que le dispositif d'extraction de la suspension aqueuse comprend un conduit (7) qui débouche dans l'enceinte (12), sous la colonne (14).

## Patentansprüche

1. Verfahren zur Herstellung von Natriumcarbonatmonohydrat, gemäss welchem man wasserfreies Natriumcarbonat und Wasser mit einer wässrigen Suspension von Kristallen von Natriumcarbonatmonohydrat bei einer Temperatur unterhalb des Übergangspunkts des Natriumcarbonatmonohydrats in wasserfreies Natriumcarbonat mischt, man die sich ergebende Mischung homogenisiert und man die Kristalle des Natriumcarbonatmonohydrats abscheidet, dadurch gekennzeichnet, dass man zum Mischen des wasserfreien Natriumcarbonats mit der Suspension das wasserfreie Natriumcarbonat in einer Zone der Suspension einführt, in der man einen Wirbel erzeugt.

2. Verfahren nach Anspruch 1, dadurch gekennzeichnet, dass man stromabwärts des Wirbels, der geradlinig und nach unten verlaufend ist, die Suspension einer geradlinigen, nach unten verlaufenden Translation in der Verlängerung des Wirbels ohne Rotation aussetzt.

3. Verfahren nach Anspruch 2, dadurch gekennzeichnet, dass man um den Wirbel herum eine Ringströmung der Suspension erzeugt, und dass man diese einer geradlinigen, nach unten verlaufenden Translation in der Richtung des Wirbels ohne Rotation aussetzt.

4. Verfahren nach Anspruch 3, dadurch gekennzeichnet, dass man die Suspension einem kontinuierlichen Abfliessen aussetzt, das den Wirbel und die Ringströmung, die geradlinige, nach unten verlaufende vorerwähnte stromabwärts des Wirbels gelegene Translation und eine geradlinige, nach oben verlaufende Translation ohne Rotation umfasst.

5. Verfahren nach irgendeinem der Ansprüche 1 bis 4, dadurch gekennzeichnet, dass man eine wässrige Lösung des Natriumcarbonatmonohydrats mit einem Gehalt von 30 bis 55 Gew.-% Kristallen des Natriumcarbonatmonohydrats und 8 bis 12 Gew.-% gelöstes Natriumchlorid verwendet.

6. Verfahren nach irgendeinem der Ansprüche 1 bis 5, dadurch gekennzeichnet, dass man die Temperatur der Suspension regelt, damit ihr Unterschied zu dem Übergangspunkt des Natriumcarbonatmonohydrats zu wasserfreiem Natriumcarbonat zwischen 3 und 10 °C liegt, und dass man das wasserfreie Natriumcarbonat vor dessen Vermischung mit der Suspension auf eine Temperatur mindestens gleich der Temperatur der Suspension erwärmt.

7. Anlage zu Herstellung von Natriumcarbonatmonohydrat nach dem Verfahren nach irgendeinem der Ansprüche 4 bis 6, mit einerseits einer Kristallisationskammer (1) in Verbindung mit einer Zuführungseinrichtung (5) für wasserfreies Natriumcarbonat, mit einer Zuführungseinrichtung (6) für Wasser und mit einer Abzieheinrichtung (7) für eine wässrige Suspension von Kristallen von Natriumcarbonatmonohydrat und mit andererseits einer Abscheideeinrichtung für die Kristalle des Natriumcarbonatmonohydrats der aus der Kristallisationskammer abgezogenen wässrigen Suspension, dadurch gekennzeichnet, dass die Kristallisationskammer (1) über einen zylindrischen, vertikalen Raum (12), über eine an ihrem oberen und ihrem unteren Ende offene, in dem Raum unter dem normalen Niveau der Suspension der Kristalle des Natriumcarbonatmonohydrats angeordnete vertikale Kolonne (14), über einen an seinem oberen und seinem unteren Ende offenen und in dem oberen Teil der Kolonne angeordneten vertikalen Kamin (21), über Mittel (23, 15), um einen geradlinigen, nach unten verlaufenden Wirbel in einer wässrigen Suspension von Kristallen von Natriumcarbonatmonohydrat in dem Kamin (21) zu erzeugen, und über Mittel (15), um eine wässrige Suspension von Natriumcarbonatmonohydrat in der Kolonne (14) einer vertikalen, nach unten verlaufenden Translation auszusetzen, verfügt, und dass die Einrichtung zur Zuführung von wasserfreiem Natriumcarbonat über eine Leitung (5) verfügt, die in den Kamin (21) einmündet.

8. Anlage nach Anspruch 7, dadurch gekennzeichnet, dass der Kamin (21) axial in der Kolonne (14) angeordnet ist, die ihrerseits axial in dem Raum (12) angeordnet ist, und dass die Mittel, um den Wirbel zu erzeugen, und die Mittel, um die Suspension der Translation in der Kolonne auszusetzen, in einem in der Kolonne unter dem Kamin angeordneten Drehflügel (15) bestehen, dass vertikale Deflektoren (17, 18) quer an der Wand der Kolonne (14) im Inneren derselben befestigt sind, und dass vertikale Trennwände (19) radial in der zwischen der Wand des Raums (12) und der Kolonne (14) gebildeten Ringkammer angeordnet sind.

9. Anlage nach Anspruch 8, dadurch gekennzeichnet, dass der Drehflügel (15) an eine vertikale Drehachse (16) angeschlossen ist, die vollständig unter dem Drehflügel (15) angeordnet ist.

10. Anlage nach irgendeinem der Ansprüche 7 bis 9, dadurch gekennzeichnet, dass die Einrichtung zur Zuführung von Wasser über eine Leitung (6) verfügt, die in den Kamin (21) einmündet, und dass die Einrichtung zum Abziehen der wässrigen Suspension über eine Leitung (7) verfügt, die in den Raum (12) unter der Kolonne (14) einmündet.

**Claims**

1. Process for manufacturing sodium carbonate monohydrate, according to which anhydrous sodium carbonate and water are mixed with an aqueous suspension of sodium carbonate monohydrate crystals at a temperature below the transition point of sodium carbonate monohydrate to anhydrous sodium carbonate, the resulting mixture is homogenised ans the crystals of sodium carbonate monohydrate are separated, characterised in that, to mix the anhydrous sodium carbonate with the suspension, the anhydrous sodium carbonate is introduced in a suspension zone in which a vortex is created.

2. Process according to Claim 1, characterised in that, downstream of the vortex, which is rectilinear and descending, the suspension is subjected to a descending rectilinear translation in the prolongation of the vortex without rotation.

3. Process according to Claim 2, characterised in that, around the vortex, an annular suspension current is created which is subjected to a descending rectilinear translation in the direction of the vortex, without rotation.

4. Process according to Claim 3, characterised in that the suspension is subjected to a continuous flow comprising the vortex and the annular current, the abovementioned descending rectilinear translation downstream of the vortex and an ascending rectilinear translation without rotation.

5. Process according to any one of Claims 1 to 4, characterised in that an aqueous suspension of sodium carbonate monohydrate is employed containing from 30 to 55% by weight of sodium carbonate monohydrate crystals and from 8 to 12% by weight of dissolved sodium chloride.

6. Process according to any one of Claims 1 to 5, characterised in that the temperatrue of the suspension is adjusted so that it differs from the transition point of sodium carbonate monohydrate to anhydrous sodium carbonate by between 3 and 10 °C, and the anhydrous sodium carbonate is heated to a temperature at least equal to the temperature of the suspension before being mixed therewith.

7. Installation for manufacturing sodium carbonate monohydrate in accordance with the process according to any one of Claims 4 to 6, comprising, on the one hand a crystallising chamber (1) in communication with a device for admitting anhydrous sodium carbonate (5), with a device for admitting water (6) and with a device for drawing off an aqueous suspension of sodium carbonate monohydrate crystals (7), and on the other hand a device for separating sodium carbonate monohydrate crystals from the aqueous suspension drawn off from the crystallising chamber, characterised in that the crystallising chamber (1) comprises a vertical cylindrical enclosure (12), a vertical column (14) open at its upper and lower ends and arranged within the enclosure below the normal level of the suspension of sodium carbonate monohydrate crystals, a vertical funnel (21) open at its upper and lower ends and arranged in the upper part of the column, a means (23, 15) for creating a descending rectilinear vortex in an aqueous suspension of sodium carbonate monohydrate crystals in the funnel (21), and a means (15) for subjecting an aqueous suspension of sodium carbonate monohydrate present in the column (14) to a descending vertical translation, and in that the device for admitting anhydrous sodium carbonate comprises a duct (5) which opens into the funnel (21).

8. Installation according to claim 7, characterised in that the funnel (21) is arranged axially in the column (14), which is itself arranged axially in the enclosure (12), in that the means for creating the vortex and the means for subjecting the suspension to the translation in the column consists of a propellor (15) arranged in the column underneath the funnel, and in that vertical deflectors (17, 18) are fixed transversely to the wall of the column (14) and inside the latter, and vertical partitions (19) are arranged radially within the annular chamber (20) formed between the wall of the enclosure (12) and the column (14).

9. Installation according to Claim 8, characterised in that the propellor (15) is coupled to a vertical rotating shaft (16) which is arranged entirely underneath the propellor (15).

10. Installation according to any one of Claims 7 to 9, characterised in that the device for admitting water comprises a duct (6) which opens into the funnel (21) and in that the device for extracting the aqueous suspension comprises a duct (7) which opens into the enclosure (12) underneath the column (14).

1/5

# FIG 1

2/5

# FIG 2

FIG 3

4/5.

# FIG 4

3/5

# FIG 5